# EUROPÄISCHE PATENTSCHRIFT

(11) **EP 1 670 290 B1**
(45) Veröffentlichungstag und Bekanntmachung des Hinweises auf die Patenterteilung: **21.11.2007**
(21) Anmeldenummer: 05026912.5
(22) Anmeldetag: 09.12.2005
(51) Int. Cl.: H05B 6/70, H05B 6/80

(54) **Gargerät mit Mikrowellenerzeugungseinrichtung**
Cooking appartus with microwave generation unit
Appareil de cuisson muni d'un dispositf générateur de micro-ondes

(30) Priorität: 13.12.2004 DE 102004059900
(43) Veröffentlichungstag der Anmeldung: 14.06.2006
(73) Patentinhaber: Topinox Sarl, 68271 Wittenheim (FR)
(72) Erfinder:
(74) Vertreter: Weber-Bruls, Dorothée

(56) Entgegenhaltungen:
- EP-A- 0 373 608
- EP-A- 0 429 822
- FR-A- 1 545 143
- US-A- 4 329 557
- US-A- 6 002 120

## Beschreibung

Die vorliegende Erfindung betrifft ein Gargerät mit einem Garraum, einer Mikrowellenerzeugungseinrichtung und zumindest einem Koaxial- oder Streifenleiter innerhalb des Garraums, der mit der Mikrowellenerzeugungseinrichtung verbunden ist und über den von der Mikrowellenerzeugungseinrichtung erzeugte Mikrowellenstrahlung innerhalb des Garraums auskoppelbar ist.

Gargeräte mit einer Mikrowellenerzeugungseinrichtung sind aus dem Stand der Technik vielfältig bekannt. So können beispielsweise Mikrowellenerzeugungseinrichtungen in einem herkömmlichen Umluftgargerät integriert sein, oder es sind Gargeräte bekannt, mit denen lediglich ein Garen auf Basis von Mikrowellenstrahlung möglich ist.

Ein besonderes Problem für Mikrowellengargeräte ist der gleichmäßige Energieeintrag über mehrere Behandlungs- bzw. Einschubebenen für Gargut. Häufig ist es lediglich möglich, nur ein bis zwei Einschubebenen zur Erwärmung des Garguts unter Zuhilfenahme von Mikrowellenenergie zu nutzen, wobei in der Regel für jede nutzbare Einschubebene eine eigene Mikrowellenerzeugungseinrichtung (beispielsweise umfassend ein Magnetron) verwendet wird. Herkömmlicherweise wird die Mikrowellenstrahlung von der Mikrowellenerzeugungseinrichtung zum Garraum über Hohlleiter transportiert, die verhältnismäßig viel Bauraum benötigen. Insbesondere wenn mehrere Einschubebenen in einem Garraum eines Gargeräts mit Mikrowellenleistung beaufschlagt werden sollen, ist der erforderliche Platzbedarf für diese Hohlleiter nachteilig.

Die WO 01/82653 A1 offenbart ein Mikrowellengargerät mit einer Vielzahl von Ebenen, die jeweils mit Mikrowellen bestrahlt werden können. Dabei weist das Mikrowellengargerät auf jeder Ebene einen Hohlleiter mit einer Vielzahl von Öffnungen auf, die Mikrowellenstrahlung auf in die Ebenen eingebrachtes Gargut horizontal abstrahlen. Jede Ebene weist einen separaten Mikrowellenerzeuger auf.

Die US 4,329,557 beschreibt ein Mikrowellengargerät, das über mehrere Ebenen verfügen kann. Mikrowellenstrahlung tritt über eine Öffnung in einen Garraum ein, wird von einem Blech umgelenkt und kann über seitlich angeordnete Hohlleiter von einem oberen Bereich des Garraums zu einem unteren Bereich des Garraums geleitet werden. Die Hohlleiter können Schlitze aufweisen, in die ein Brett zur Aufnahme eines Garguts eingeschoben werden kann. Durch die Hohlleiter soll erreicht werden, daß auch ein in dem unteren Bereich des Mikrowellengargeräts eingebrachtes Gargut gleichmäßig erwärmt werden kann.

Aus der WO 97/19576 A1 ist ein Mikrowellengargerät mit einem Garraum bekannt, in den über mehrere Öffnungen Mikrowellenstrahlung eingebracht werden kann. Um das Garen besser steuern zu können, können Hohlleiter von einer Mikrowellenquelle zu den Öffnungen mittels Verschlußmitteln verschlossen werden.

Aus der WO 03/079729 A2 ist ein Mikrowellengargerät bekannt, bei dem ein Gargut in einem Garraum dadurch erkannt werden kann, daß über eine kleine Öffnung des Garraums reflektierte Mikrowellenstrahlung nach außen geleitet und von einem Sensor detektiert werden kann. Über die Energie der austretenden Mikrowellenstrahlung kann geschlossen werden, ob und was für ein Gargut sich im Inneren des Garraums befindet.

Die US 4,507,531 offenbart ein Mikrowellengargerät mit einem Garraum, bei dem eine Ausgangsleistung eines Magnetrons über einen Anodenstrom als Regelgröße geregelt wird, damit ein Garprozeß immer gleich ausführbar ist, da die Leistung des Magnetrons genau kontrolliert werden kann.

Ein Gargerät mit einer Mikrowellenerzeugungseinrichtung ist auch aus der US 2004/0004074 A1 bekannt, wobei dieses Mikrowellengargerät eine spezielle Mikrowellenauskopplung zur Vergleichmäßigung des Energieeintrags in Gargut im Garraum nutzt. Genauer gesagt ist der Garraum dieses Gargeräts mit mehreren Ausstrahlöffnungen für Mikrowellen ausgerüstet, wobei bspw. eine erste Ausstrahlöffnung elektromagnetische Strahlung über Reflexion zu einer zweiten Ausstrahlöffnung im Garraum weiterleitet. Reflektierte elektromagnetische Strahlung kann über die zweite Ausstrahlöffnung auch zu einer dritten Ausstrahlöffnung weitergeleitet werden. Schließlich kann über die dritte Ausstrahlöffnung reflektierte elektromagnetische Strahlung zu einer Last weitergeleitet werden, deren Temperatur gemessen werden kann. Die verschiedenen Ausstrahlöffnungen des Mikrowellengargeräts stehen mit einem Streifenleiter in Wirkverbindung, der außerhalb des Garraums angeordnet ist. Die Auskopplung der Strahlung erfolgt an den Garraumwänden.

In der US 5,170,142 ist ein hermetischer Anschluß eines Koaxialkabelpins an einen inneren Stromkreis in einer Radiofrequenzvorrichtung offenbart, wobei der Koaxialkabelpin von einem Glasmaterial und einem dielektrischen Material umgeben ist. Das Glasmaterial wird auf seine Schmelztemperatur erwärmt und anschließend in ein Gehäuse eingeführt, um nach Abkühlung durch eine dichte Verbindung mit dem Gehäuse eine hermetische Abdichtung zu bilden. Der Koaxialkabelpin wird somit fest über das Glasmaterial mit dem Gehäuse verbunden.

Ein gattungsgemäßes Gargerät ist beispielsweise aus der US 4,600,822 bekannt, die zwar eine Mikrostreifenleitung zur Mikrowellenheizung betrifft, ohne daß jedoch Details der Anordnung derselben in dem Gargerät offenbart sind.

Auch aus der US 2004/0188429 A ist ein gattungsgemäßes Gargerät bekannt, wobei jedoch lediglich der Transport von Mikrowellen zum Garraum über ein Koaxialkabel offenbart ist.

Die US 5,334,403 betrifft eine Vorrichtung zum Auftauen, Wiederaufwärmen und Trocknen von Produkten in einem abgeschlossenen Behandlungsraum durch Bewegen einer Mikrowellenquelle oberhalb einer Produktlage.

Die US 6,323,471 B1 betrifft unter anderem eine Mikrowellenaufheizung unter reduziertem Druck eines zu trocknenden, zu konzentrierenden, zu entfrostenden, zu röstenden oder zu sterilisierenden Objekts unter Einsatz von Reflektorplatten zur uniformen Aufheizung.

Die DE 1 937 470 U1 betrifft einen Mikrowellenherd mit einem mehrstöckigen und drehbar ausgebildeten Hordengestell zur Aufnahme von mit den Mikrowellen zu behandelnden Gargut.

Der vorliegenden Erfindung liegt die Aufgabe zugrunde, das gattungsgemäße Gargerät derart weiterzuentwickeln, daß Mikrowellenstrahlen auf platzsparende Weise von der Mikrowellenerzeugungseinrichtung zum zu bestrahlenden Gargut geleitet werden können. Auch soll die Positionierung der Mikrowellenerzeugungseinrichtung möglichst flexibel sein, ohne Dichtigkeits- oder Stabilitätsprobleme hervorzurufen. Ferner soll die Auskopplung der Mikrowellenstrahlung in den Garraum möglichst nahe am Gargut erfolgt.

Diese Aufgabe wird erfindungsgemäß dadurch gelöst, daß zumindest eine Kontakt- und/oder Kopplungseinrichtung zum Verbinden des Koaxialleiters im Garraum mit der Mikrowellenerzeugungseinrichtung im Bereich einer Garraumwand vorgesehen ist, wobei die Kontakt- und/oder Kopplungseinrichtung zum Koppeln des Koaxialleiters im Garraum mit einem Koaxialleiter eines zweiten Koaxialkabels außerhalb des Garraums über eine Steckverbindung ausgeführt ist, und der zumindest eine Koaxial- oder Streifenleiter in mindestens einem Glied des Gargeräts in Form einer Stütze oder eines festen Trägers innerhalb des Garraums oder in zumindest einem in den Garraum einbringbaren Zubehörteil integriert ist, wobei der Träger zum Tragen einschiebbarer Garbehälter, Platten, Bleche und/oder Wannen dient und/oder das Zubehörteil ein Einhängegestell, einen Hordengestellwagen oder ein Tellerregeneriergestell umfaßt.

Ferner wird mit der Erfindung vorgeschlagen, daß eine Verbindung zwischen der Kontakt- und/oder Kopplungseinrichtung und dem Koaxial- oder Streifenleiter, insbesondere automatisch, durch Einbringen des Zuberhörteils in den Garraum herstellbar ist.

Bevorzugt kann vorgesehen sein, daß die Kontakt- und/oder Kopplungseinrichtung eine Durchführung durch die Garraumwand, vorzugsweise im Bereich der Bodenfläche des Gargeräts, und/oder einen Splitter umfaßt.

Dabei kann vorgesehen sein, daß ein Anschlußelement, vorzugsweise in Verbindung mit dem Koaxialleiter des ersten Koaxialkabels, und ein Koaxialpin, vorzugsweise in Verbindung mit dem Koaxialleiter des zweiten Koaxialkabels, zumindest bereichsweise durch ein Isolationsmaterial und eine Garraumwand geführt sind.

Gemäß der Erfindung kann dabei wiederum vorgesehen sein, daß das Anschlußelement mit dem Zubehörteil verbindbar oder verbunden ist.

Mit der Erfindung wird auch vorgeschlagen, daß der Koaxialpin zumindest teilweise in dem Anschlußelement, das vorzugsweise die Form eines Bolzens aufweist, verläuft.

Auch kann vorgesehen sein, daß das Isolationsmaterial eine Ausnehmung aufweist, in die das Anschlußelement einsteckbar ist.

Ferner wird erfindungsgemäß vorgeschlagen, daß in dem Bodenbereich des Isolationsmaterials der Koaxialpin angeordnet ist.

Weiterhin kann vorgesehen sein, daß das Isolationsmaterial eine Keramik, wie Steatith oder Glas, umfaßt.

Bevorzugte erfindungsgemäße Gargeräte sind dadurch gekennzeichnet, daß der Koaxialleiter im Garraum zumindest teilweise durch einen Leiter, vorzugsweise in Form eines Rundleiters, in einem eine Masse darstellenden Teil des Glieds, vorzugsweise in Form eines U-förmigen Profils, bereitgestellt ist.

Ferner kann vorgesehen sein, daß die Mikrowellenerzeugungseinrichtung, umfassend zumindest ein Magnetron, zumindest einen Hochspannungstrafo, zumindest einen Heizungstrafo, zumindest einen Kondensator, zumindest eine Diode, zumindest ein Schaltnetzteil und/oder eine Kühleinrichtung, außerhalb des Garraums, insbesondere außerhalb des Gerätekörpers des Gargeräts, vorzugsweise in einem Unterschrank, zumindest teilweise angeordnet ist.

Mit der Erfindung werden auch Ausführungsformen vorgeschlagen, die gekennzeichnet sind durch zumindest eine Antenne in Wirkverbindung mit dem Koaxialleiter, insbesondere angeschweißt an den Rundleiter, zur Abstrahlung von Mikrowellen in den Garraum.

Weiterhin kann vorgesehen sein, daß das Glied, insbesondere das Zubehörteil, mit mindestens einer Einschubleiste für zumindest einen Gargutträger und zumindest einer Auskopplungsstelle, an der Mikrowellenstrahlung vom Koaxialleiter in den Garraum, insbesondere über eine Antenne, auskoppelbar ist, in Wirkverbindung steht, wobei bevorzugt mehrere Auskopplungsstellen und mehrere Einschubleisten innerhalb des Garraums angeordnet sind, und zwar zueinander ausgerichtet.

Dabei kann vorgesehen sein, die Auskopplungsstellen zum Auskoppeln von Mikrowellenstrahlung im wesentlichen parallel zu Behandlungsebenen für Gargut und/oder Gargutträgern ausgerichtet sind.

Mit der Erfindung wird auch vorgeschlagen, daß sich in einer Behandlungsebene, die durch zwei nahe an sich gegenüberliegenden Garraumwänden angeordneten Einschubleisten bestimmt ist, Auskopplungsstellen, diametral oder direkt, gegenüberstehen.

Erfindungsgemäß kann weiterhin vorgesehen sein, daß jede Einschubleiste zwischen zwei Trägern, insbesondere in Form von Hordengestellsäulen, verläuft, die mit zumindest einer Kontakt- und/oder Kopplungseinrichtung, vorzugsweise unter Zwischenschaltung eines Splitters, verbindbar sind.

Gemäß der Erfindung kann ferner vorgesehen sein, daß das Glied, insbesondere das Zubehörteil, benachbart zu einem innerhalb des Gargeräts vorgesehenen Lüfterrad angeordnet ist, lösbar und/oder bewegbar ist.

Schließlich wird mit der Erfindung vorgeschlagen, daß dasselbe mit Heißluft und/oder Dampf betreibbar ist.

Der Erfindung liegt somit die überraschende Erkenntnis zugrunde, daß es mit dem erfindungsgemäßen Gargerät möglich ist, die Raumerfordernisse zur Leitung von Mikrowellenstrahlung in einen Garraum dadurch zu verringern, daß Koaxial- oder Streifenleiter innerhalb des Garraums eingesetzt werden, die zur Auskopplung von Mikrowellenstrahlung in den Garraum in einem festen Träger innerhalb des Garraums oder in einem in einen Garraum einbringbaren Zubehörteil integriert sind. Besonders vorteilhaft ist es dabei, wenn die Koaxialleiter gebildet werden durch Rundleiter, die in geerdeten U-förmigen Profilen des Trägers oder Zubehörteils, insbesondere in Form eines Hordengestells, verlaufen. Der Einsatz solcher Koaxial- oder Streifenleiter innerhalb des Garraums ermöglicht eine flexible Anpassung an das in den Garraum eingebrachte Gargut, insbesondere dessen Plazierung, damit die Auskopplung der Mikrowellenstrahlung möglichst nahe am Gargut erfolgen kann. Zu diesem Zwecke können der Träger oder das Zubehörteil bevorzugt eine oder mehrere Auskopplungsstelle(n) aufweisen, die in unterschiedlichen Höhen innerhalb des Garraums angeordnet werden können, um die Auskopplung von Mikrowellenstrahlen in Bezug auf Behandlungsebenen für Gargut zu optimieren. Beispielsweise kann an einen Rundleiter eine Antenne direkt angeschweißt sein, die durch eine Öffnung in einem Profil des Hordengestells hindurchtreten kann. Sind in mehreren Trägern oder Zubehörteilen Koaxial- oder Streifenleiter integriert, können die einzelnen Auskopplungsstellen so eingestellt werden, daß sie sich, beispielsweise diagonal, gegenüberliegen. Ebenfalls können Koaxial- oder Streifenleiter in sämtlichen Trägern oder Stützen von Zubehörteilen integriert sein. Wird die Strahlrichtung der Mikrowellenstrahlen aus der Auskopplungsstelle parallel zu den Behandlungsebenen geführt, kann ein besonders guter Energieeintrag in das zu erwärmende Gargut erzielt werden.

Ist ein Koaxial- oder Streifenleiter in einem Zubehörteil integriert, so ist es vorteilhaft, wenn eine Kontakt- und/oder Kopplungseinrichtung vorgesehen ist, über die das Zubehörteil mit einer außerhalb des Garraums angeordneten Mikrowellenerzeugungseinrichtung verbunden ist. Eine solche Kontakt- und/oder Kopplungseinrichtung ist bevorzugt im Bereich einer Gehäusewand des Garraums angeordnet, an welche sich innerhalb des Garraums der Koaxial- oder Streifenleiter anschließt. Außerhalb des Garraums kann als Verbindungsleitung zwischen der Mikrowellenerzeugungseinrichtung und der Kontakt- und/oder Kopplungseinrichtung ein Koaxialkabel verwendet werden. Die Kontakt- und/oder Kopplungseinrichtung kann dabei vorteilhafterweise elektrisch und/oder magnetisch abgeschirmt, dampfdicht und/oder bis zu einer Temperatur von zumindest 250°C, vorzugsweise 300°C, temperaturstabil. Ebenfalls bevorzugt ist, daß der Koaxial- oder Streifenleiter bis zu einer Temperatur von zumindest 250°C, bevorzugt 300°C, temperaturbeständig ist und/oder eine Leistung von etwa 1KW transportiert.

Vorteilhaft für die Erfindung ist daher, daß Mikrowellenenergie von einer Mikrowellenerzeugungseinrichtung zu einer Gehäusewand eines Garraums beispielsweise über Koaxialkabel, geleitet werden kann, die bislang in Gargeräten und bei Leistungen von etwa 1 kW nicht eingesetzt wurden. Die Leitung über Koaxialkabel ermöglicht eine flexible Gestaltung und Positionierung der mikrowellenerzeugenden Komponenten, die neben einem Magnetron auch ein Hochspannungstrafo, ein Heizungstrafo, Kondensatoren, Dioden und ein Schaltnetzteil umfassen können. Ebenfalls ermöglicht der Einsatz von Koaxialkabeln eine flexible Kühlung dieser Komponenten, z.B. auch außerhalb des eigentlichen Gargerätekorpus in einem dafür ausgestatteten Unterschrank oder ähnlichem.

Durch die Kontakt- und/oder Kopplungseinrichtung kann zudem eine Kopplung eines Koaxialpins eines Koaxialkabels mit einem, beispielsweise auch austauschbaren, im Garraum angeordneten Koaxialleiter durch eine Gehäusewand erfolgen. Der Koaxialleiter innerhalb des Garraums wird zu diesem Zweck über ein Anschlußelement in Isolationsmaterial eingesetzt und kann jederzeit durch beliebige andere Koaxialleiter mit entsprechenden Anschlußelementen ausgetauscht werden. Durch diese Austauschbarkeit kann das Gargerät flexibler genutzt werden.

Die erfindungsgemäße Kontakt- und/oder Kopplungseinrichtung ermöglicht ferner die Überprüfung der Mikrowellenkompatibilität bspw. eines Zubehörteils des Gargeräts. Ist ein in die Ausnehmung des Isolationsmaterials eingestecktes Anschlußelement des Zubehörteils nicht mikrowellenkompatibel, kann über eine Steuer- oder Regeleinrichtung, die mit einer Überprüfungsvorrichtung in Wirkverbindung steht, die Mikrowellenerzeugungseinrichtung ausgeschaltet werden. Dadurch kann eine Beschädigung des Gargeräts und der Zubehörteile verhindert werden. Mit anderen Worten ist das erfindungsgemäße Gargerät auch gefahrlos mit Standardzubehör betreibbar, also ohne Einkopplung von Mikrowellen.

Die Anzahl an Trägern oder Zubehörteilen, in denen Koaxial- oder Streifenleiter integriert sind, kann je nach Gargerätgröße bzw. Größe von Einschubbehälter, in denen Gargut erwärmt werden soll, eingestellt werden.

Desweiteren kann ein erfindungsgemäßes Gargerät mit einer Lasterkennungseinrichtung vorgesehen sein, wobei über die Lasterkennungseinrichtung vorzugsweise eine Auswertung absorbierter und/oder reflektierter Mikrowellenstrahlung, eine Anodenstrommessung an der Mikrowellenerzeugungseinrichtung oder eine Messung einer elektromagnetischen Störung, insbesondere unter Ausnutzung der Bluetooth-Technologie, durchführbar ist. Mit dieser Lasterkennung der absorbierten oder reflektierten Mikrowellenstrahlung kann eine intelligente Steuerung der benötigten Mikrowellenleistung bezogen auf unterschiedliche Behandlungsebenen oder gar Gargutbehälter ermöglicht werden. Somit kann die Zeitdauer, die Intensität und der Ort der Mikrowellenleistung durch Art und Umfang der Beschickung des Gargeräts über entsprechende Garprogramme gesteuert werden. Bevorzugt erfolgt die Lasterkennung automatisch.

Über eine Leistungsregelungseinrichtung können die verschiedenen Bereiche des Garraums, bspw. die unterschiedlichen Behandlungsebenen für Gargut, separat geregelt werden. Die Leistungsregelungseinrichtung zum insbesondere individuellen Regeln der Leistung von Mikrowellenstrahlung an jeder Auskopplungsstelle derselben im Garraum erhöht die Garpräzision. Dabei kann die Leistungsregelungseinrichtung zumindest ein Verschlußmittel für die Auskopplungsstellen zum teilweisen oder vollständigen Verschließen derselben umfassen.

Der Koaxial- oder Streifenleiter kann selbst platzsparend, ähnlich einem bzw. um ein Gaswärmetauscher, an einem Lüfterrad angeordnet werden.

Weiterhin kann eine Steuer- oder Regeleinrichtung in Wirkverbindung mit der Mikrowellenerzeugungseinrichtung, der Lasterkennungseinrichtung, der Kontakt- und/oder Kopplungseinrichtung, der Überprüfungseinrichtung, der Leistungsregelungseinrichtung, mindestens einer Auskopplungsstelle, mindestens einem Verschlußmittel und/oder mindestens einem Sensor, vorzugsweise zum Bestimmen der Temperatur innerhalb des Garraums, bei einem erfindungsgemäßen Gargerät vorgesehen sein.

Weitere Merkmale und Vorteile der Erfindung ergeben sich beispielhaft aus der nachfolgenden detaillierten Beschreibung zweier bevorzugter Ausführungsformen der Erfindung anhand einer schematischen Zeichnung. Dabei zeigt
- Figur 1: eine perspektivische Ansicht eines erfindungsgemäßen Gargeräts;
- Figur 2: einen Querschnitt durch eine Kontakt- und/oder Kopplungseinrichtung in dem Gargerät von Figur 1; und
- Figur 3: eine perspektivische Teilansicht eines Hordengestells eines weiteren erfindungsgemäßen Gargeräts.

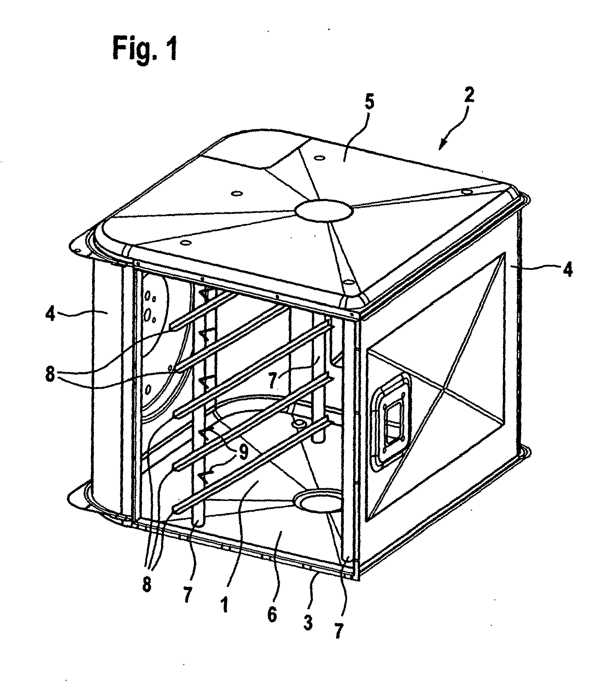

Die Figur 1 zeigt einen Garraum 1 eines erfindungsgemäßen Gargeräts 2, der von einer Bodenfläche 3, Seitenwänden 4 und einer Abdeckung 5 umgrenzt wird, wobei eine Öffnung 6 definiert wird, die beispielsweise durch eine nicht gezeigte Gargerätetür verschlossen werden kann. Innerhalb des Garraums 1 sind vier Träger 7 angeordnet, von denen in Figur 1 drei erkannt werden können. An den Trägern 7 sind Einschubleisten 8 angeordnet, in die beispielsweise Bleche zum Abstützen von Garbehältern (nicht gezeigt) oder dergleichen eingeschoben und somit im Garraum plaziert werden können. Zumindest ein Träger 7 ist mit einem Koaxialleiter ausgeführt, d.h. in dem Träger 7 ist ein Koaxialleiter integriert. Der als Koaxialleiter ausgeführte Träger 7 weist mehrere Auskopplungsstellen 9 auf, die in Antennen übergehen, über die Mikrowellenstrahlung vom Koaxialleiter in den Garraum 1 abgegeben werden kann. Wie aus Figur 1 erkannt werden kann, korrespondiert die Anordnung jeder Auskopplungsstelle 9 bzw. Antenne mit einer Einschubleiste 8, so daß für jeden auf einer Einschubleiste 8 eingeschobenen Garbehälter zumindest eine Auskopplungsstelle 9 entlang des Trägers 7 vorliegt.

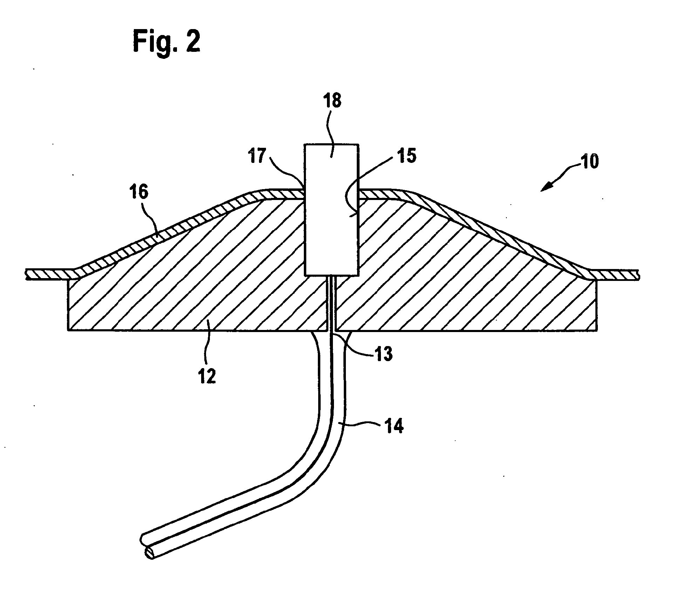

Figur 2 zeigt eine Kontakt- und/oder Kopplungseinrichtung 10 zur Verbindung des Trägers 7 samt seinem Koaxialleiter, und zwar im Bereich der Bodenfläche 3 des Gargeräts 2 von Figur 1, mit einer nicht gezeigten Mikrowellenerzeugungseinrichtung, indem in einem Isolationsmaterial 2 ein Koaxialpin 13 eines Koaxialkabels 14 eingesteckt ist. Das Koaxialkabel 14 kann über eine beliebige Befestigungsvorrichtung (nicht gezeigt) an dem Isolationsmaterial 12 befestigt sein. In dem Isolationsmaterial 12 ist eine Ausnehmung 15 vorgesehen, in deren Bodenbereich die Spitze des Koaxialpins 13 anliegt. Das Isolationsmaterial 12, das beispielsweise eine Keramik, wie Steatith oder Glas, sein kann, ist in einer Ausbauchung der Garraumwand 16 der Bodenfläche 3 des in Figur 1 gezeigten Gargeräts angeordnet. Diese Garraumwand 16 weist eine Öffnung 17 auf, die über der Ausnehmung 15 des Isolationsmaterials 12 liegt. Durch die Öffnung 17 und in die Ausnehmung 15 ist ein Anschlußelement des Koaxialleiters des Trägers 7 des in Figur 1 gezeigten Gargeräts 2 einsetzbar. Das Anschlußelement kann dabei ein Bolzen 18 sein. Ist der Bolzen 18 in die Ausnehmung 15 des Isolationsmaterials 12 eingesetzt, so wird eine Kontaktverbindung zwischen der Spitze des Koaxialpins 13 und dem Anschlußelement 18 des Koaxialleiters des Trägers 7 ermöglicht. Somit kann die über das Koaxialkabel 14 gelieferte Mikrowellenstrahlung durch die Kontakt- und/oder Kopplungseinrichtung an das Anschlußelement 18 des Koaxialleiters übermittelt werden, um schließlich innerhalb des Garraums 1 an den Auskopplungsstelle 9 über Antennen ausgekoppelt zu werden. Die Auskopplung kann über eine nicht gezeigte Leistungsreglungseinrichtung geregelt stattfinden.

Wie ohne weiteres ersichtlich ist, können die unterschiedlichsten Koaxialleiter mit entsprechenden Anschlußelementen an die Kontakt- und/oder Kopplungseinrichtung angefügt werden, um eine Kopplung über den Koaxialpin 13 und das Koaxialkabel 14 an die Mikrowellenerzeugungseinrichtung zu ermöglichen. Erfindungsgemäß wird somit zum einen die Ankopplung austauschbarer Koaxialleiter (Zubehörteile) an die Mikrowellenerzeugungseinrichtung ermöglicht und zum anderen eine flexible Verbindung zwischen zwei Leitern (Koaxialpin und Koaxialleiter) im Inneren des Isolationsmaterials 2 bereitgestellt.

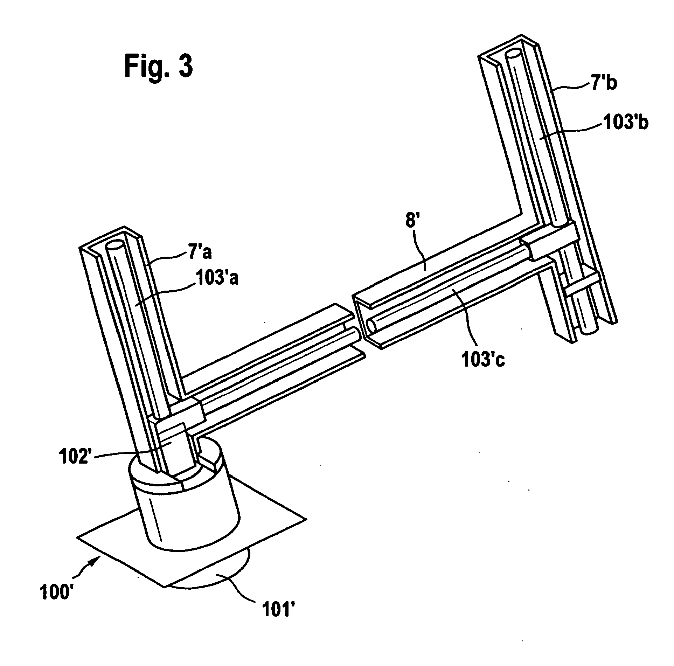

Wie aus Figur 3 ersichtlich, kann auch erfindungsgemäß ein Koaxialleiter zum Transport von Mikrowellen in einen Garraum in ein Hordengestell integriert sein, das seinerseits zwei im wesentlichen vertikal im Garraum verlaufende Träger 7'a, 7'b und eine Vielzahl dazwischen im wesentlichen horizontal verlaufender Einschubleisten 8', von denen nur eine dargestellt ist, aufweist. Sowohl die Träger 7'a, 7'b als auch die Einschubleisten 8' sind zu diesem Zwecke im wesentlichen U-förmig ausgebildet, beherbergen in ihrem Inneren Rundleiter 103'a, 103'b, 103'c und liegen auf Masse. Somit werden durch das Hordengestell 7'a, 7'b, 8' samt der Rundleiter 103'a, 103'b, 103'c Koaxialleiter bereitgestellt, und zwar auf besonders kosten- und platzsparende Weise. Die U-Konfiguration des Hordengestellprofils ermöglicht zudem einen Abfluß von Flüssigkeit.

Besonders vorteilhaft ist bei der Ausführungsform gemäß Figur 3 auch, daß Mikrowellenenergie über eine nicht gezeigte Mikrowellenerzeugungseinrichtung in eine Kontakt- und/oder Kopplungseinrichtung 100' eingespeist werden kann, die in dem Boden eines nicht gezeigten Gargeräts angeordnet ist und ihrerseits nicht nur eine Durchführung 101' für Mikrowellen sondern auch einen T-förmigen Splitter 102' aufweist, um Mikrowellenenergie den Rundleiter 103'a, 103'b in den beiden Trägern 7'a, 7'b des Hordengestells zuführen zu kommen, so daß das Hordengestell um die Kontakt- und/oder Kopplungseinrichtung 100' drehbeweglich in einem Garraum installierbar ist. Selbstverständlich müssen die Durchführen 101' sowie der Splitter 102' isoliert durch den Garraumboden geführt werden, ohne daß eine entsprechende Isolation im Detail in Figur 3 dargestellt ist.

An die Rundleiter 103'a, 103'b, 103'c sind nicht gezeigte Antennen anbringbar, insbesondere anschweißbar. Die Antennen können dabei entweder im Bereich der beiden Trägern 7'a und 7'b oder der Einschubleisten 8' bereitgestellt werden.

In der Einbausituation sind zwei Hordengestelle gemäß Figur 3 an zwei sich gegenüberliegenden Seiten in einem Garraum eines Gargerätes angeordnet, so daß durch zwei sich auf einer Höhe befindende Einschubleisten 8' eine Behandlungsebene für Gargut definiert wird, das über die Antennen gezielt mit Mikrowellen zu beaufschlagen ist.

### Bezugszeichenliste

- 1: Garraum
- 2: Gargerät
- 3: Bodenfläche
- 4: Seitenwand
- 5: Abdeckung
- 6: Öffnung
- 7, 7'a, 7'b: Träger
- 8, 8': Einschubleiste
- 9: Auskopplungsstelle
- 10: Kopplungseinrichtung
- 12: Isolationsmaterial
- 13: Koaxialpin
- 14: Koaxialkabel
- 15: Ausnehmung
- 16: Garraumwand
- 17: Öffnung
- 18: Bolzen
- 100': Kontakt- und/oder Kopplungseinrichtung
- 101': Durchführung
- 102': Splitter
- 103'a, 103'b, 103'c: Rundleiter

## Patentansprüche

1. Gargerät (2) mit einem Garraum (1), einer Mikrowellenerzeugungseinrichtung und zumindest einem Koaxial- oder Streifenleiter (7'a, 103'a; 7'b, 103'b; 8', 103'c) innerhalb des Garraums (1), der mit der Mikrowellenerzeugungseinrichtung verbunden ist und über den von der Mikrowellenerzeugungseinrichtung erzeugte Mikrowellenstrahlung innerhalb des Garraums (1) auskoppelbar ist, **dadurch gekennzeichnet, daß**
zumindest eine Kontakt- und/oder Kopplungseinrichtung (13, 18, 100') zum Verbinden zumindest eines Koaxialleiters (7'a, 103'a; 7'b, 103'b; 8', 103'c) im Garraum (1) mit der Mikrowellenerzeugungseinrichtung im Bereich einer Garraumwand (16) vorgesehen ist, wobei die Kontakt- und/oder Kopplungseinrichtung (13, 18) zum Koppeln des Koaxialleiters (7'a, 103'a, 7'b, 103'b, 8', 103'c) im Garraum (1) mit einem Koaxialleiter eines zweiten Koaxialkabels (14) außerhalb des Garraums (1) über eine Steckverbindung ausgeführt ist, und der Koaxialleiter (7'a, 103'a; 7'b, 103'b; 8', 103'c) in mindestens einem Glied des Gargeräts (2) in Form einer Stütze oder eines festen Trägers (7, 7'a, 7'b) innerhalb des Garraums (1) oder in zumindest einem in den Garraum einbringbaren Zubehörteil (7, 7'a, 7'b, 8') integriert ist, wobei der Träger (7, 7'a, 7'b) zum Tragen einschiebbarer Garbehälter, Platten, Bleche und/oder Wannen dient und/oder das Zubehörteil (7, 7'a, 7'b, 8, 8') ein Einhängegestell, einen Hordengestellwagen oder ein Tellerregeneriergestell umfaßt.

2. Gargerät nach Anspruch 1, **dadurch gekennzeichnet, daß**
eine Verbindung zwischen der Kontakt- und/oder Kopplungseinrichtung (13, 18, 100') und dem Koaxial- oder Streifenleiter (7'a, 103'a; 7'b, 103'b; 8', 103'c), insbesondere automatisch, durch Einbringen des Zuberhörteils (7, 7'a, 7'b, 8, 8') in den Garraum (1) herstellbar ist.

3. Gargerät nach Anspruch 1 oder 2, **dadurch gekennzeichnet, daß**
die Kontakt- und/oder Kopplungseinrichtung (100') eine Durchführung (101') durch die Garraumwand (16), vorzugsweise im Bereich der Bodenfläche (3) des Gargeräts (2), und/oder einen Splitter (102') umfaßt.

4. Gargerät nach einen der vorangehenden Ansprüche, **dadurch gekennzeichnet, daß**
ein Anschlußelement (18), vorzugsweise in Verbindung mit dem Koaxialleiter des ersten Koaxialkabels, und ein Koaxialpin (13), vorzugsweise in Verbindung mit dem Koaxialleiter des zweiten Koaxialkabels (14), zumindest bereichsweise durch ein Isolationsmaterial (12) und eine Garraumwand (16) geführt sind.

5. Gargerät nach Anspruch 4, **dadurch gekennzeichnet, daß**
das Anschlußelement (18) mit dem Zubehörteil (7) verbindbar oder verbunden ist.

6. Gargerät nach Anspruch 4 oder 5, **dadurch gekennzeichnet, daß**
der Koaxialpin (13) zumindest teilweise in dem Anschlußelement (18), das vorzugsweise die Form eines Bolzens (18) aufweist, verläuft.

7. Gargerät nach einem der Ansprüche 4 bis 6, **dadurch gekennzeichnet, daß**
das Isolationsmaterial (12) eine Ausnehmung (15) aufweist, in die das Anschlußelement (18) einsteckbar ist.

8. Gargerät nach einem der Ansprüche 4 bis 7, **dadurch gekennzeichnet, daß**
in dem Bodenbereich des Isolationsmaterials (12) der Koaxialpin (13) angeordnet ist.

9. Gargerät nach einem der Ansprüche 4 bis 8, **dadurch gekennzeichnet, daß**
das Isolationsmaterial (12) eine Keramik, wie Steatith oder Glas, umfaßt.

10. Gargerät nach einem der vorangehenden Ansprüche, **dadurch gekennzeichnet, daß**
der Koaxialleiter im Garraum (1) zumindest teilweise durch einen Leiter, vorzugsweise in Form eines Rundleiters (103'a, 103'b, 103'c), in einem eine Masse darstellenden Teil des Glieds (7'a, 7'b, 8'), vorzugsweise in Form eines U-förmigen Profils, bereitgestellt ist.

11. Gargerät nach einem der vorangehenden Ansprüche, **dadurch gekennzeichnet, daß**
die Mikrowellenerzeugungseinrichtung, umfassend zumindest ein Magnetron, zumindest einen Hochspannungstrafo, zumindest einen Heizungstrafo, zumindest einen Kondensator, zumindest eine Diode, zumindest ein Schaltnetzteil und/oder eine Kühleinrichtung, außerhalb des Garraums, insbesondere außerhalb des Gerätekörpers des Gargeräts, vorzugsweise in einem Unterschrank, zumindest teilweise angeordnet ist.

12. Gargerät nach einem der vorangehenden Ansprüche, **gekennzeichnet durch**
zumindest eine Antenne in Wirkverbindung mit dem Koaxialleiter, insbesondere angeschweißt an den Rundleiter, zur Abstrahlung von Mikrowellen in den Garraum.

13. Gargerät nach einem der vorangehenden Ansprüche, **dadurch gekennzeichnet, daß**
das Glied (7, 7'a, 7'b, 8, 8'), insbesondere das Zubehörteil (7, 7'a, 7'b, 8'), mit mindestens einer Einschubleiste (8, 8') für zumindest einen Gargutträger und zumindest einer Auskopplungsstelle (9), an der Mikrowellenstrahlung vom Koaxialleiter (7'a, 103'a; 7'b, 103'b; 8', 103'c) in den Garraum (1), insbesondere über eine Antenne, auskoppelbar ist, in Wirkverbindung steht, wobei bevorzugt mehrere Auskopplungsstellen (9) und mehrere Einschubleisten (8, 8') innerhalb des Garraums (1) angeordnet sind, und zwar zueinander ausgerichtet.

14. Gargerät nach Anspruch 13, **dadurch gekennzeichnet, daß**
die Auskopplungsstellen (9) zum Auskoppeln von Mikrowellenstrahlung im wesentlichen parallel zu Behandlungsebenen für Gargut und/oder Gargutträgern ausgerichtet sind.

15. Gargerät nach Anspruch 13 oder 14, **dadurch gekennzeichnet, daß**
sich in einer Behandlungsebene, die durch zwei nahe an sich gegenüberliegenden Garraumwänden angeordneten Einschubleisten (8, 8') bestimmt ist, Auskopplungsstellen (9), diametral oder direkt, gegenüberstehen.

16. Gargerät nach Anspruch 14 oder 15, **dadurch gekennzeichnet, daß**
jede Einschubleiste (8, 8') zwischen zwei Trägern (7, 7'a, 7'b), insbesondere in Form von Hordengestellsäulen, verläuft, die mit zumindest einer Kontakt- und/oder Kopplungseinrichtung (13, 18, 100'), vorzugsweise unter Zwischenschaltung eines Splitters (102'), verbindbar sind.

17. Gargerät nach einem der vorangehenden Ansprüche, **dadurch gekennzeichnet, daß**
das Glied (7, 7'a, 7'b, 8, 8'), insbesondere das Zubehörteil (7, 7'a, 7'b, 8, 8'), benachbart zu einem innerhalb des Gargeräts (2) vorgesehenen Lüfterrad angeordnet ist, lösbar und/oder bewegbar ist.

18. Gargerät nach einem der vorangehenden Ansprüche, **dadurch gekennzeichnet, daß** dasselbe mit Heißluft und/oder Dampf betreibbar ist.

## Claims

1. Cooking appliance (2) with a cooking chamber (1), a microwave generation unit and at least one coaxial or strip conductor (7'a, 103'a; 7'b, 103'b; 8', 103'c) inside the cooking chamber (1), which conductor is connected to the microwave generation unit and by means of which conductor microwave radiation that is generated by the microwave generation unit inside the cooking chamber (1) can be coupled out, **characterized in that** at least one contact and/or coupling unit (13, 18, 100') for connecting at least one coaxial conductor (7'a, 103'a; 7'b, 103'b; 8', 103'c) in the cooking chamber (1) to the microwave generation unit is provided in the region of a cooking chamber wall (16), the contact and/or coupling unit (13, 18) being configured for coupling the coaxial conductor (7'a, 103'a; 7'b, 103'b; 8', 103'c) in the cooking chamber (1) to a coaxial conductor of a second coaxial cable (14) outside the cooking chamber (1) by means of a plug-in connection, and the coaxial conductor (7'a, 103'a; 7'b, 103'b; 8', 103'c) being integrated in at least one element of the cooking appliance (2) in the form of a support or a fixed carrier (7, 7'a, 7'b) inside the cooking chamber (1) or in at least one accessory (7, 7'a, 7'b, 8') that can be introduced into the cooking chamber, the carrier (7, 7'a, 7'b) serving for carrying push-in cooking vessels, baking plates, sheets and/or trays and/or the accessory (7, 7'a, 7'b, 8, 8') comprising a suspension rack, a roll-in rack trolley or a dish regenerating rack.

2. Cooking appliance according to Claim 1, **characterized in that** a connection can be established between the contact and/or coupling unit (13, 18, 100') and the coaxial or strip conductor (7'a, 103'a; 7'b, 103'b; 8', 103'c), in particular automatically, by introducing the accessory (7, 7'a, 7'b, 8, 8') into the cooking chamber (1).

3. Cooking appliance according to Claim 1 or 2, **characterized in that** the contact and/or coupling unit (100') comprises a bushing (101') through the cooking chamber wall (16), preferably in the region of the bottom surface (3) of the cooking appliance (2), and/or a splitter (102').

4. Cooking appliance according to one of the preceding claims, **characterized in that** a connection element (18), preferably in connection with the coaxial conductor of the first coaxial cable, and a coaxial pin (13), preferably in connection with the coaxial conductor of the second coaxial cable (14), are led at least in certain regions through an insulation material (12) and a cooking chamber wall (16).

5. Cooking appliance according to Claim 4, **characterized in that** the connection element (18) can be connected or is connected to the accessory (7).

6. Cooking appliance according to Claim 4 or 5, **characterized in that** the coaxial pin (13) extends at least partly in the connection element (18), which preferably has the form of a bolt (18).

7. Cooking appliance according to one of Claims 4 to 6, **characterized in that** the insulation material (12) has a recess (15), into which the connection element (18) can be inserted.

8. Cooking appliance according to one of Claims 4 to 7, **characterized in that** the coaxial pin (13) is arranged in the bottom region of the insulation material (12).

9. Cooking appliance according to one of Claims 4 to 8, **characterized in that** the insulation material (12) comprises a ceramic, such as steatite or glass.

10. Cooking appliance according to one of the preceding claims, **characterized in that** the coaxial conductor in the cooking chamber (1) is provided at least partly by a conductor, preferably in the form of a circular conductor (103'a, 103'b, 103'c), in a part of the element (7'a, 7'b, 8') representing an earth, preferably in the form of a U-shaped profile.

11. Cooking appliance according to one of the preceding claims, **characterized in that** the microwave generation unit, comprising at least one magnetron, at least one high-voltage transformer, at least one heating transformer, at least one capacitor, at least one diode, at least one switched-mode power supply and/or a cooling unit, is arranged at least partly outside the cooking chamber, in particular outside the body of the cooking appliance, preferably in a base unit.

12. Cooking appliance according to one of the preceding claims, **characterized by** at least one antenna in operative connection with the coaxial conductor, in particular welded onto the circular conductor, for radiating microwaves into the cooking chamber.

13. Cooking appliance according to one of the preceding claims, **characterized in that** the element (7, 7'a, 7'b, 8, 8'), in particular the accessory (7, 7'a, 7'b, 8'), is in operative connection with at least one push-in rail (8, 8') for at least one cooked-item carrier and at least one coupling-out point (9), at which microwave radiation can be coupled out from the coaxial conductor (7'a, 103'a; 7'b, 103'b; 8', 103'c) into the cooking chamber (1), in particular via an antenna, it being preferred for a number of coupling-out points (9) and a number of push-in rails (8, 8') to be arranged inside the cooking chamber (1), to be precise aligned in relation to one another.

14. Cooking appliance according to Claim 13, **characterized in that** the coupling-out points (9) for coupling out microwave radiation are aligned substantially parallel to handling levels for items being cooked and/or cooked-item carriers.

15. Cooking appliance according to Claim 13 or 14, **characterized in that**, in a handling level defined by two push-in rails (8, 8') arranged close to cooking chamber walls that are opposite one another, coupling-out points (9) are situated diametrically or directly opposite one another.

16. Cooking appliance according to Claim 14 or 15, **characterized in that** each push-in rail (8, 8') extends between two carriers (7, 7'a, 7'b), in particular in the form of roll-in rack uprights, which can be connected to at least one contact and/or coupling unit (13, 18, 100'), preferably with a splitter (102') interposed.

17. Cooking appliance according to one of the preceding claims, **characterized in that** the element (7, 7'a, 7'b, 8, 8'), in particular the accessory (7, 7'a, 7'b, 8, 8'), is arranged detachably and/or movably adjacent to a fan wheel provided inside the cooking appliance (2).

18. Cooking appliance according to one of the preceding claims, **characterized in that** the same can be operated with hot air and/or steam.

## Revendications

1. Appareil de cuisson (2) comportant un espace de cuisson (1), un dispositif générateur de micro-ondes et au moins un guide d'ondes à ruban ou coaxial (7'a, 103'a ; 7'b, 103'b ; 8', 103'c) à l'intérieur de l'espace de cuisson (1), lequel est relié au dispositif générateur de micro-ondes, et par l'intermédiaire duquel le rayonnement de micro-ondes produit par un dispositif générateur de micro-ondes à l'intérieur de l'espace de cuisson (1) peut être extrait, **caractérisé en ce qu'**au moins un dispositif de contact et/ou de couplage (13, 18, 100') est prévu pour le raccordement d'au moins un guide coaxial (7'a, 103'a; 7'b, 103'b ; 8', 103'c) dans l'espace de cuisson (1) avec le dispositif générateur de micro-ondes dans la zone d'une paroi d'espace de cuisson (16) le dispositif de contact et/ou de couplage (13, 18) étant réalisé de manière à coupler le guide coaxial (7'a; 103'a ; 7'b, 103'b ; 8', 103'c) dans l'espace de cuisson (1) avec un guide coaxial d'un second câble coaxial (14) à l'intérieur de l'espace de cuisson (1) par l'intermédiaire d'une connexion enfichable, et le guide coaxial (7'a, 103'a ; 7'b, 103'b ; 8', 103'c) étant intégré dans au moins un élément de l'appareil de cuisson (2) sous la forme d'un appui ou d'un support fixe (7, 7'a, 7'b) à l'intérieur de l'espace de cuisson (1) ou dans au moins une partie formant accessoire insérable dans l'espace de cuisson (7, 7'a, 7'b, 8'), de sorte que le support (7, 7'a, 7'b) sert à supporter des récipients de cuisson, des plaques, des tôles et/ou des bacs pouvant être introduits de manière coulissante, et/ou la pièce formant accessoire (7, 7'a, 7'b, 8, 8') comporte un châssis à suspendre, un chariot avec châssis à claies, ou un châssis régénérateur d'assiette.

2. Appareil de cuisson selon la revendication 1, **caractérisé en ce qu'**une liaison entre un dispositif de contact et/ou de couplage (13, 18, 100') et le guide d'ondes à ruban ou coaxial (7'a, 103'a ; 7'b, 103'b ; 8', 103'c) peut être constituée, en particulier de manière automatique, par introduction de la pièce formant accessoire (7, 7'a, 7'b, 8, 8') dans l'espace de cuisson (1).

3. Appareil de cuisson selon la revendication 1 ou 2, **caractérisé en ce que** le dispositif de contact et/ou de couplage (100') comporte une traversée (101') à travers la paroi d'espace de cuisson (16), de préférence dans la zone de surface inférieure (3) de l'appareil de cuisson (2), et/ou un répartiteur (102')

4. Appareil de cuisson selon l'une quelconque des revendications précédentes, **caractérisé en ce qu'**un élément de raccordement (18) est introduit de préférence en liaison avec le guide coaxial du premier câble coaxial, et une broche coaxiale (13) de préférence en liaison avec le guide coaxial du second câble coaxial (14), au moins par zone à travers un matériau d'isolation (12) et une paroi d'espace de cuisson (16).

5. Appareil de cuisson selon la revendication 4, **caractérisé en ce que** l'élément de raccordement (18) peut être raccordé ou est raccordé avec la pièce formant accessoire (7).

6. Appareil de cuisson selon la revendication 4 ou 5, **caractérisé en ce que** la broche coaxiale (13) passe au moins en partie dans l'élément de raccordement (18), présentant de préférence la forme d'un boulon (18).

7. Appareil de cuisson selon l'une quelconque des revendications 4 à 6, **caractérisé en ce que** le matériau d'isolation (12) présente un évidement (15) dans lequel l'élément de raccordement (18) peut être logé.

8. Appareil de cuisson selon l'une quelconque des revendications 4 à 7, **caractérisé en ce que** la broche coaxiale (13) est agencée dans le plancher du matériau d'isolation (12).

9. Appareil de cuisson selon l'une quelconque des revendications 4 à 8, **caractérisé en ce que** le matériau d'isolation (12) comporte une céramique, comme de la stéatite ou du verre.

10. Appareil de cuisson selon l'une quelconque des revendications précédentes, **caractérisé en ce que** le guide coaxial dans l'espace de cuisson (1) est réalisé au moins pour partie par l'intermédiaire d'un guide, de préférence sous la forme d'un guide rond (103'a, 103'b, 103'c), dans une partie d'évidement (7'a, 7'b, 8') représentant une masse, de préférence sous la forme d'un profil en forme de U.

11. Appareil de cuisson selon l'une quelconque des revendications précédentes, **caractérisé en ce que** le dispositif générateur de micro-ondes, comportant au moins un magnétron, au moins un transformateur haute tension, au moins un transformateur de chauffage, au moins un condensateur, au moins une diode, au moins un bloc d'alimentation secteur, et/ou un dispositif réfrigérant, est agencé au moins partiellement en dehors de l'espace de cuisson, en particulier en dehors du corps d'appareil de l'appareil de cuisson, de préférence dans une armoire inférieure.

12. Appareil de cuisson selon l'une quelconque des revendications précédentes, **caractérisé par** au moins une antenne en liaison opérationnelle avec le guide coaxial, en particulier soudée sur le guide rond, pour l'émission de micro-ondes dans l'espace de cuisson.

13. Appareil de cuisson selon l'une quelconque des revendications précédentes, **caractérisé en ce que** l'élément (7, 7'a, 7'b, 8, 8'), en particulier la pièce formant accessoire (7, 7'a, 7'b, 8'), se trouve en liaison opérationnelle avec au moins une tringle à glissière (8, 8') pour au moins un support de produit à cuire, et au moins un emplacement de couplage (9), pouvant être couplé au rayonnement micro-ondes provenant du guide coaxial (7'a, 103'a ; 7'b, 103'b ; 8', 103'c) dans l'espace de cuisson (1), en particulier via une antenne, et dans lequel sont agencés de manière préférée plusieurs emplacements de couplage (9) et plusieurs tringles à glissière (8, 8'), en particulier orientés les uns vers les autres.

14. Appareil de cuisson selon la revendication 13, **caractérisé en ce que** les emplacements de couplage (9) pour coupler le rayonnement micro-ondes sont orientés principalement parallèlement aux surfaces de manutention des produits à cuire et/ou de support de produit à cuire.

15. Appareil de cuisson selon la revendication 13 ou 14, **caractérisé par** des emplacements de couplage (9) qui sont situés diamétralement ou directement l'un en face de l'autre, dans une zone de manutention qui est déterminée par deux tringles à glissière (8, 8') agencées sur deux parois d'espace de cuisson proches en vis-à-vis.

16. Appareil de cuisson selon la revendication 14 ou 15, **caractérisé en ce que** chaque tringle à glissière (8, 8') s'étire entre deux supports (7, 7'a, 7'b), en particulier sous la forme de colonnes de châssis à claies, pouvant être reliés au moins à un dispositif de contact et/ou de couplage (13, 18, 100'), de préférence avec la commutation intermédiaire d'un répartiteur (102').

17. Appareil de cuisson selon l'une quelconque des revendications précédentes, **caractérisé en ce que** l'élément (7, 7'a, 7'b, 8, 8'), en particulier la pièce formant accessoire (7, 7'a, 7'b, 8, 8'), est agencé à proximité d'une roue de ventilateur prévue à l'intérieur de l'appareil de cuisson (2), de manière détachable et/ou mobile.

18. Appareil de cuisson selon l'une quelconque des revendications précédentes, **caractérisé en ce que** celui-ci peut fonctionner avec de l'air chaud et/ou de la vapeur.
